# EUROPEAN PATENT SPECIFICATION

(11) **EP 3 646 687 B1**
(45) Date of publication and mention of the grant of the patent: **06.07.2022**
(21) Application number: 19000464.8
(22) Date of filing: 11.10.2019
(51) Int. Cl.: A01B 3/46, A01B 63/22, A01B 73/00, B60B 35/10

(54) **IMPROVED CARRIAGE ASSEMBLY, IN PARTICULAR FOR REVERSIBLE PLOWING SYSTEM, AND REVERSIBLE PLOWING SYSTEM COMPRISING SUCH CARRIAGE ASSEMBLY**
VERBESSERTE SCHLITTENANORDNUNG, INSBESONDERE FÜR EIN UMKEHRBARES PFLUGSYSTEM, UND UMKEHRBARES PFLUGSYSTEM MIT EINER SOLCHEN SCHLITTENANORDNUNG
ENSEMBLE CHARIOT AMÉLIORÉ, EN PARTICULIER POUR UN SYSTÈME DE LABOUR RÉVERSIBLE ET SYSTÈME DE LABOUR RÉVERSIBLE COMPRENANT UN TEL ENSEMBLE CHARIOT

(30) Priority: 30.10.2018 IT 201800009916
(43) Date of publication of application: 06.05.2020
(73) Proprietor: Moro Aratri S.R.L., 24056 Fontanella (BG) (IT)
(72) Inventor: Moro, Andrea, I-24056 Fontanella (BG) (IT)
(74) Representative: Garavelli, Paolo

(56) References cited:
- EP-A1- 1 099 363
- EP-A1- 1 634 488
- FR-A1- 2 774 852
- FR-A1- 2 951 900
- US-B2- 6 907 719

## Description

The present invention refers to an improved carriage assembly, of the type with abutment of the wheels with a double function for circulating and working, in particular for a reversible plowing system, and to a reversible plowing system comprising at least one of such carriage assemblies.

Various types of plowing systems are known in the art, with carriage assemblies or wheel-type supporting systems used for handling and transporting such systems on the work-places.

In particular, plowing systems are known, such as the one for example disclosed in EP-B1-1099363 of the same Applicant, equipped with a carriage assembly which allows the reversible plowing system to pass from a circulation position to a work position and vice versa: in particular, these known carriage assemblies comprise two hydraulic jacks which perform the function or rotating-translating the wheel hub to make it assume a correct orientation and position for the two phases (work and circulation) and the plowing depth, depending on the position of the wheels when working) is regulated through a screw-type mechanical limit switch, which limits the translation of the hubs along the main beam of the carriage assembly. Consequently, each jack operates only on the movement of its related wheel, without performing any function in the regulation of the working depth.

Carriage assemblies of reversible plowing systems are also known, comprising a hydraulic jack aimed to regulate the plowing depth: in such assemblies, the rotation of the wheel hubs from the circulation position to the work position, and vice versa, must be performed manually, consequently resulting scarcely practical and easy, or through two further dedicated hydraulic jacks, thereby implying a greater complexity of the hydraulic plant, and the need of a further hydraulic actuation of the transporting and working means, such as for example a common agricultural tractor, to which the plowing system is connected. [→ p.3A]

Therefore object of the present invention is solving the above prior art problems by providing an improved carriage assembly, in particular for a reversible plowing system, comprising a single actuating system which allows both passing the wheels from a circulation position to a work position and vice versa, and of making such carriage assembly assume an operating working configuration chosen between a plurality of possible operating working configurations, for example in order to allow regulating the plowing depth performed by the reversible plowing system to which such carriage assembly is connected, consequently resulting more practical and easier to use, but structurally less complex with respect to what is proposed by the prior art.

Further, an object of the present invention is providing a reversible plowing system comprising at least one carriage assembly comprising a single actuating system which allows both passing the wheels from a circulation position to a work position and vice versa, and to make such carriage assembly assume an operating working configuration chosen between a plurality of possible operating US-A-6 907 719, FR-A1-2 951 900, FR-A1-2 774 852 and EP-A1- 1 634 488 disclose prior art carriage assemblies for ploughing systems. working configurations in order to allow regulating the plowing depth performed by such plowing system, consequently resulting more practical and easier to use, but structurally less complex with respect to what is proposed by the prior art.

The above and other objects and advantages of the invention, as result from the following description, are obtained with a carriage assembly as claimed in claim 1.

Further, the above and other objects and advantages of the invention are obtained with a reversible plowing system as claimed in claim 8.

Preferred embodiments and non-trivial variations of the present invention are the subject matter of the dependent claims.

It is intended that all enclosed claims are an integral part of the present application.

It will be immediately obvious that numerous variations and modifications (for example related to shape, sizes, arrangements and parts with equivalent functionality) can be made to what is described without departing from the scope of the invention as appears from the enclosed claims. The scope of protection is defined by the enclosed independent claim 1.

The present invention will be better described by some preferred embodiments thereof, provided as a non-limiting example, with reference to the enclose drawings, in which:
- Figure 1 shows a perspective view of a preferred embodiment of the carriage assembly for reversible plowing system according to the present invention;
- Figure 2a shows the view of the carriage assembly for reversible plowing system according to the present invention of Figure 1 in partial transparency;
- Figure 2b shows a perspective view of a component of the carriage assembly for reversible plowing system according to the present invention;
- Figure 3 shows a perspective view of the carriage assembly according to the present invention with the wheels in an operating circulation position;
- Figure 4 shows a perspective view of the carriage assembly according to the present invention with the wheels in an intermediate operating position between the operating circulation position and an operating working position;
- Figure 5 shows a perspective view of the carriage assembly according to the present invention in a first possible operating working configuration with the wheels in an operating working position;
- Figure 6 shows a perspective view of the carriage assembly according to the present invention in a second possible operating working configuration; and
- Figures 7a and 7b show side views of a preferred embodiment of a reversible plowing system according to the present invention with the carriage assembly, respectively, in the first operating working configuration of Figure 5 and in the second operating working configuration of Figure 6.

In brief, herein below the descriptions will not be made related to parts and components common with other carriage assemblies and plowing systems, since they are necessary for their basic operation and/or already known in the art, to explain in more detail in particular the aspects, the components and the operating principles characterizing the carriage assembly and the reversible plowing system according to the present invention.

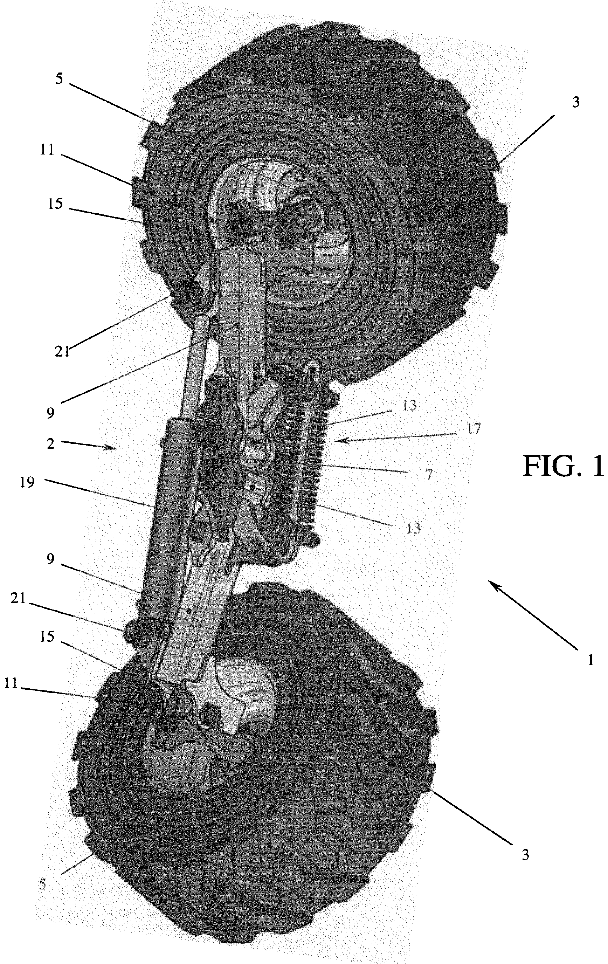

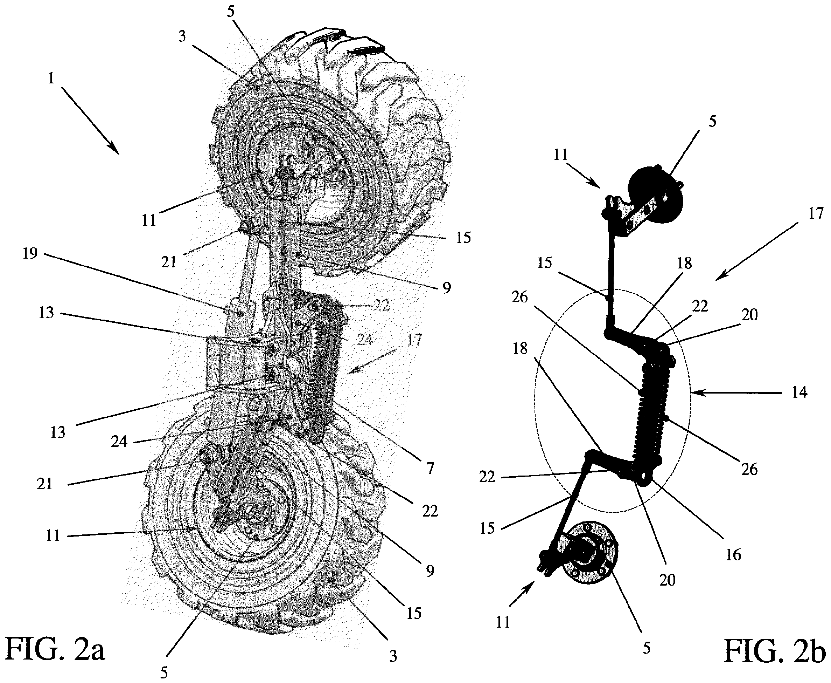

Therefore, with reference in particular to Figures 1 and 2a, it is possible to note that the carriage assembly 1 according to the present invention comprises at least two wheels 3, an actuating system 2 and at least one transmission system 17, such actuating system 2 operatively cooperating with such transmission system 17 both for passing the wheels 3 from an operating circulation position to an operating working position, and vice versa, and for changing an operating working configuration of such carriage assembly 1, modifying the distance between the wheels 3 at least when the wheels 3 are in their operating working position).

In a preferred and example embodiment thereof, the carriage assembly 1 according to the present invention therefore comprises:
- at least one central articulation assembly 7;
- at least two wheels 3, each of which is connected to a respective rotating hub 5;
- at least one pair of drive shafts 9, each of such drive shafts 9 having a first end connected to a corresponding hub 5 by interposing an articulation kinematism 11, preferably of a hinge-type, and a second end rotating connected to the central articulation assembly 7 in a respective articulation point 13, such transmission system 17 being operatively interposed between the drive shafts 9.

From Figures 2a and 2b, it is possible to note that, in particular, the transmission system 17 comprises at least one articulated kinematism 14 composed of at least one guiding element 16 common with a pair of articulated transmissions, each of which is related to a respective hub 5, each of such articulated transmissions comprising:
- at least one first arm 18;
- at least one second arm 20;
- at least one joining rod 15;
the joining rod 15 having a first end connected to a respective hub 5 by interposing a respective articulation kinematism 11 and a second end connected in an articulated way to a first end of the first arm 18, such first arm 18 having a second end connected in an articulated way to a first end of the second arm 20, such first end of the second arm 20 and such second end of the first arm 18 being further connected in an articulated way to a fixed point 22 of a respective drive shaft 9 (such fixed point 22 being preferably arranged along a projecting element 24 of the drive shaft 9), the second arm 20 having a second end at least partially sliding along the guiding element 16.

According to the invention, the second ends of the second arms 20 are mutually cooperating by interposing at least one elastic means 26 such as, for example, at least one helical spring.

The actuating system 2 comprises, preferably, at least one handling device with variable length 19, for example of the type with hydraulic jack, mutually operatively connecting the drive shafts 9 in respective articulation points 21 and adjustable in its length as function of the operating position of the wheels 3 and/or of the operating working configuration of the carriage assembly 1 which one wants to obtain. In particular, the handling device with variable length can have its respective ends connected in an articulated way to a respective drive shaft 9, preferably next to each first end of these latter ones in their respective articulation points 21.

The handling device with variable length 19 will then have a first stroke portion adapted to move, through the cooperation of the transmission system 18, the wheels 3 from their operating circulation position to their operating working position, and vice versa, by acting on the respective articulation kinematism 11; the handling device with variable length 19 will then have a second stroke portion adapted to take the carriage assembly 1 according to the present invention to various operating working configurations.

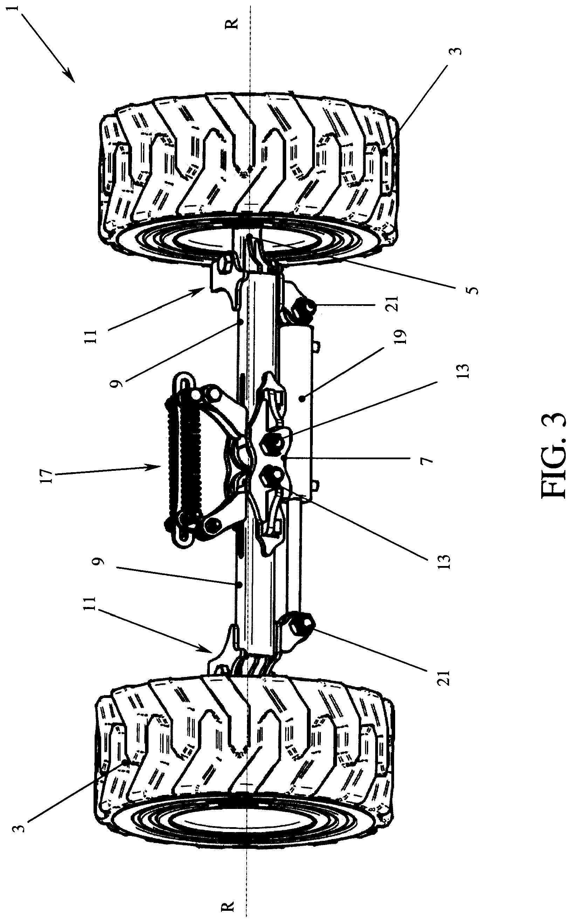

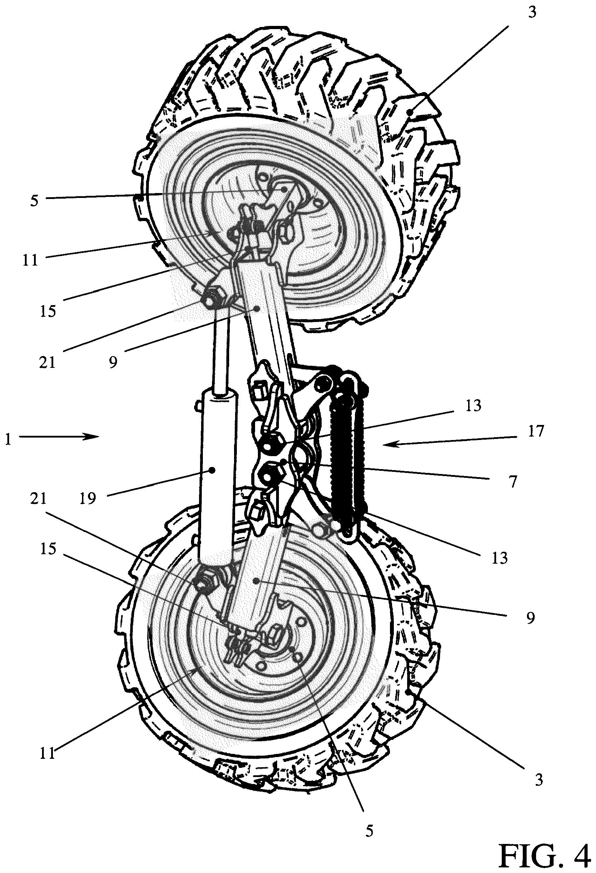

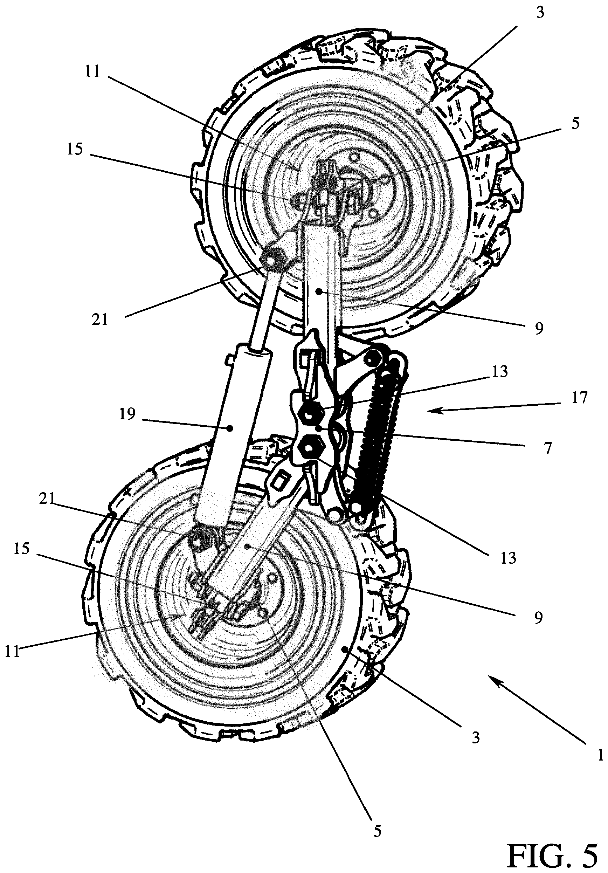

With reference then, in particular, to Figures 3, 4 and 5, it is possible to note the passage of the wheels 3 from their operating circulation position to their operating working position: Figure 3 therefore shows the carriage assembly 1 in which the wheels 3 are in their operating circulation position having their rotation axes R-R around their respective hubs substantially coinciding. Therefore, a coupling of the handling device 19 with variable length along its own stroke portion generates the decrease of the angle subtended between the drive shafts 9 and, through the articulated kinematism 18 of the transmission system 17, the progressive divergence of the wheels 3, and of their respective rotation axes, till the wheels 3 are taken to their operating working position, as shown in Figure 5 (in which, the rotation axes of the wheels 3 are substantially mutually parallel) passing through the intermediate operating position of the wheels 3 shown in Figure 4. Obviously, the contrary movement of the handling device 19 with variable length, namely its elongation along its own first stroke portion, allows, in cooperation with the articulated kinematism 18 of the transmission system 17, the reverse passage, namely the passage of the wheels 3 from their operating working position to their operating circulation position.

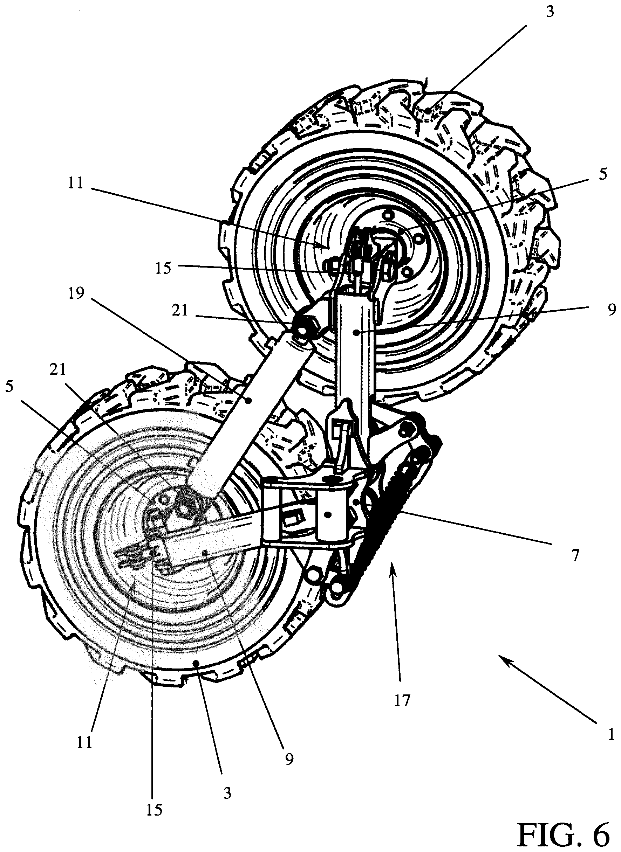

The actuating system 2, and in particular the handling device 19 with variable length, is further adapted to change the distance between the wheels 3, for example at least when they are in their operating working position, to make the carriage assembly 1 according to the present invention assume various operating working configurations, each of such configurations being determined by the distance imposed between the wheels by such handling device 19 with variable length, in particular by changing the angle subtended between the drive shafts 9. With reference therefore, in particular, to Figures 5 and 6, it is possible to note the passage, determined by the further elongation or shortening of the handling device 19 with variable length along its own second stroke portion, of the carriage assembly 1 according to the present invention between two possible working configurations, once the wheels 3 have been taken to their operating working position.

Figure 5 then shows the carriage assembly 1 in which the wheels 3 are at their maximum mutual distance allowed by the shaping of the actuating system 2 and of the transmission system 17: in particular, in such operating configuration, the handling device 19 with variable length is in a maximum extension position along its own second stroke portion.

Figure 6 instead shows the carriage assembly 1 in which the wheels 3 are at their minimum mutual distance allowed by the shaping of the second actuating system 2 and of the transmission system 17: in particular, in such operating configuration, the handling device 19 with variable length is in a minimum extension position along its own second stroke portion.

Obviously, the carriage assembly 1 according to the present invention can assume any further operating working configuration included between the two limit operating configurations shown in Figures 5 and 6 depending on the distance between the wheels 3, and in particular on the angle subtended between the drive shafts 9, determined by the length assumed by the handling device 19 with variable length along its own second stroke portion.

The present invention further refers to a reversible plowing system comprising at least one carriage assembly 1 like the previously described one.

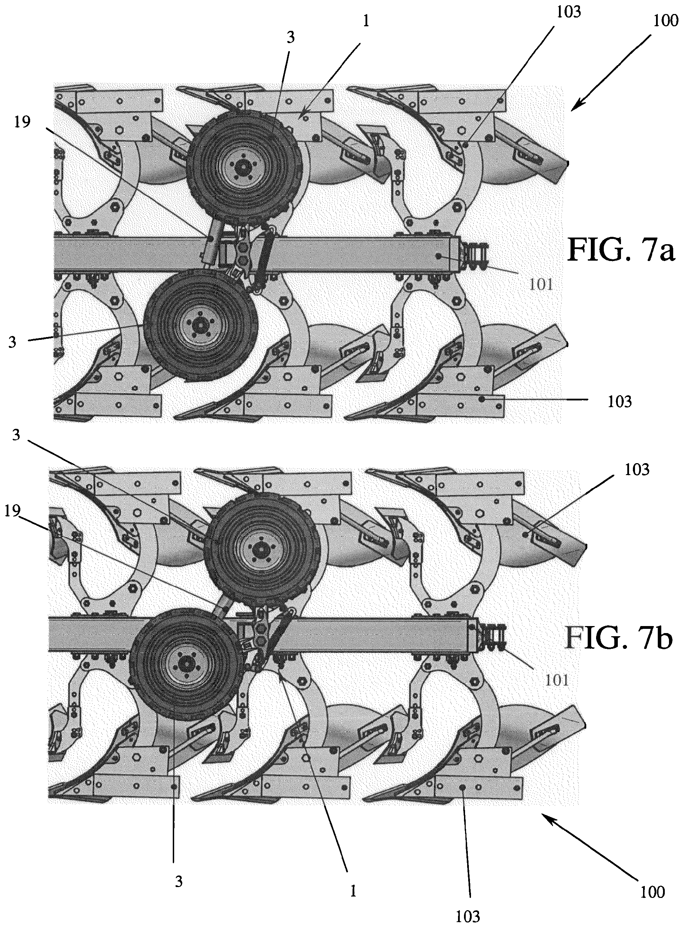

With reference in particular to Figures 7a and 7b, a preferred embodiment is therefore shown for the reversible plowing system according to the present invention.

Such system substantially comprises a supporting frame 101 equipped with a plurality of plowing assemblies 103. The plowing assemblies 103, being known in the art and not being part of the present invention, will not be further described in detail. The supporting frame 101 is adapted to be connected to transporting and working means, such as for example a common agricultural tractor (not shown) through an orientable fastening system (not shown) which makes it possible for the reversible plowing system to assume two operating positions, namely the circulation position for the transport on the work-place and the actual plowing work position: also the fastening head, being known in the art and not being part of the present invention, will not be further described in detail.

The reversible plowing system 100 of the invention further comprises at least one carriage assembly 1 like the previously described one connected to the supporting frame 101, to allow its transport on the work-place.

Obviously, the hydraulic jack possibly composing the handling device 19 with variable length of the carriage assembly 1 can advantageously be connected to a single suitable connector available on the tractor to exploit its hydraulic system and its related controls, and leaving possible further connectors free for other possible applications which are necessary.

As stated, the carriage assembly 1 allows both changing position and orientation of the wheels 3 between an operating circulation position and an operating working position and vice versa, and assuming one among several possible operating working configurations through a single actuating system 2 cooperating with the transmission system 17.

For a road circulation, it will therefore be enough to place the wheels of the carriage assembly in their operating circulation position and the supporting frame 101 with its related plowing assemblies 103 in a substantially horizontal position.

Instead, to perform the actual plowing work, it will be enough to take the supporting frame 101 with its related plowing assemblies 103 in a substantially vertical position, and the wheels 3 of the carriage assembly 1 in their operating working position: not, it is advantageously possible to also regulate the plowing depth by acting on the actuating system 2, modifying the distance between the wheels 3: in particular, and wholly as an example, Figure 7a shows the reversible plowing system 100 according to the present invention with the carriage assembly 1 in an operating working configuration (corresponding to the one shown in Figure 5) which allows a minimum plowing depth, while Figure 7b shows the reversible plowing system 100 according to the present invention with the carriage assembly 1 in an operating working configuration (corresponding to the one shown in Figure 6) which allows a maximum plowing depth.

Obviously, the plowing system 100 according to the present invention can operate with different plowing depths included between those described above as an example, taking the carriage assembly 1 according to the present invention to assume any further operating working configuration included between the two limit operating configurations shown in Figures 5 and 6 depending on the distance between the wheels 3 determined by the handling device 19 and, in particular, by the length assumed by the handling device 19 with variable length.

## Claims

1. Carriage assembly (1) comprising at least two wheels (3), an actuating system (2) and at least one transmission system (17), said actuating system (2) operatively cooperating with said transmission system (17) both for passing said wheels (3) from an operating circulation position to an operating working position through a rotation, and vice versa, wherein the rotation axes of said wheels (3) are substantially mutually parallel in the operating working position and substantially coinciding in the operating circulation position, and for changing an operating working configuration of said carriage assembly (1) by modifying a distance between said wheels (3) when said wheels (3) are in said operating working position, said transmission system (17) comprising at least one articulated kinematism (14) composed of at least one guiding element (16) common to a pair of articulated transmissions, each of said articulated transmissions comprising at least one first arm (18), at least one second arm (20), at least one joining rod (15), said joining rod (15) having a first end connected to a respective hub (5) by interposing a respective articulation kinematism (11) and a second end connected in an articulated way to a first end of said first arm (18), said first arm (18) having a second end connected in an articulated way to a first end of said second arm (20), said first end of said second arm (20) and said second end of said first arm (18) being further connected in an articulated way to a fixed point (22) of a respective drive shaft (9), said second arm (20) having a second end at least partially sliding along said guiding element (16), **characterized in that** said second ends of said second arms (20) are mutually cooperating by interposing at least one elastic means (26).

2. Carriage assembly (1) according to the previous claim, **characterized in that** said actuating system (2) changes an operating working configuration of said carriage assembly (1) by modifying a distance between the circumferences of said wheels (3).

3. Carriage assembly (1) according to any one of the previous claims, **characterized in that** it comprises:
- at least one central articulation assembly (7);
- at least two wheels (3), each of which is connected to a respective rotating hub (5);
- at least one pair of drive shafts (9), each of said drive shafts (9) having a first end connected to a corresponding hub (5) by interposing an articulation kinematism (11) and a second end rotating connected to said central articulation assembly (7) in a respective articulation point (13), said transmission system (17) being operatively interposed between said drive shafts (9).

4. Carriage assembly (1) according to the previous claim, **characterized in that** said articulation kinematism (11) is of a hinge type.

5. Carriage assembly (1) according to the previous claim, **characterized in that** said fixed point (22) is arranged along a projecting element (24) of said drive shaft (9).

6. Carriage assembly (1) according to any one of the previous claims, **characterized in that** said actuating system (2) comprises at least one handling device (19) with variable length mutually operatively connecting said drive shafts (9) in respective articulation points (21) and adjustable in its length depending on said operating position of said wheels (3) and/or on said operating working configuration of said carriage assembly (1) to be obtained.

7. Carriage assembly (1) according to the previous claim, **characterized in that** said handling device (19) with variable length has a first stroke portion adapted to move, through a cooperation of said transmission system (18), said wheels (3) from said operating circulation position to said operating working position and vice versa, by acting on said respective articulation kinematism (11), and a second stroke portion adapted to take said carriage assembly (1) in various of said operating working configurations.

8. Reversible plowing system (100), **characterized in that** it comprises at least one carriage assembly (1) according to any one of claims 1 to 7.

## Patentansprüche

1. Laufkatzenanordnung (1), umfassend mindestens zwei Räder (3), ein Betätigungssystem (2) und mindestens ein Übertragungssystem (17), wobei das Betätigungssystem (2) mit dem Übertragungssystem (17) in Wirkverbindung steht die Räder (3) von einer Umlauf-Betriebsposition in eine Arbeits-Betriebsposition mittels einer Drehung übergehen und umgekehrt, wobei die Drehachsen der Räder (3) in der Betriebsposition im Wesentlichen parallel zueinander sind der Arbeit und in der Umlaufbetriebsposition im Wesentlichen zusammenfallen, und um eine Betriebskonfiguration der Transportwagenanordnung (1) durch Modifizieren des Abstands zwischen den Rädern (3) zu verändern, wenn sich die Räder (3) in der Betriebsbetriebsposition befinden, dem Rückführsystem (17) mit mindestens einer Gelenkverbindung (14), die aus mindestens einem Führungselement (16) besteht, das einem Paar Gelenkübertragungen gemeinsam ist, wobei jede der Gelenkübertragungen mindestens einen ersten Arm (18), mindestens einen zweiten Arm (20), mindestens eine Verbindungsstange (15), wobei die Verbindungsstange (15) ein erstes Ende hat, das mit einer entsprechenden Nabe (5) mittels der Zwischenschaltung einer entsprechenden Kinematik verbunden ist Mechanismusgelenk (11) und ein zweites Ende, das schwenkbar mit einem ersten Ende des ersten Arms (18) verbunden ist, wobei der erste Arm (18) ein zweites Ende hat, das schwenkbar mit einem ersten Ende des zweiten Arms (20) verbunden ist, wobei das erste Ende wobei der zweite Arm (20) und das zweite Ende des ersten Arms (18) ferner gelenkig mit einem festen Punkt (22) einer jeweiligen Halbwelle (9) verbunden sind, wobei der zweite Arm (20) einen zweiten aufweist Ende zumindest teilweise entlang dem Führungselement (16) gleitet, **dadurch gekennzeichnet, dass** die zweiten Enden der zweiten Arme (20) durch das Einfügen mindestens eines elastischen Mittels (26) miteinander zusammenwirken.

2. Laufkatzenanordnung (1) nach dem vorhergehenden Anspruch, **dadurch gekennzeichnet, dass** das Betätigungssystem (2) eine operative Arbeitskonfiguration der Wagenanordnung (1) durch Ändern eines Abstands zwischen den Umfängen der Räder (3) verändert.

3. Laufkatzenanordnung (1) nach einem der vorhergehenden Ansprüche, **dadurch gekennzeichnet, dass** sie umfasst:
- mindestens eine Gruppe zentraler Gelenke (7);
- mindestens zwei Räder (3), von denen jedes mit einer jeweiligen rotierenden Nabe (5) verbunden ist;
- mindestens ein Paar Halbwellen (9), wobei jede der Halbwellen (9) ein erstes Ende hat, das mit einer entsprechenden Nabe (5) durch Zwischenschaltung eines kinematischen Gelenkmechanismus (11) verbunden ist, und ein zweites Ende schwenkbar mit der zentralen Gelenkgruppe (7) in einem entsprechenden Gelenkpunkt (13) verbunden ist, wobei das Übertragungssystem (17) operativ zwischen den Halbwellen (9) angeordnet ist.

4. Laufkatzenanordnung (1) nach dem vorhergehenden Anspruch, **dadurch gekennzeichnet, dass** der Gelenkmechanismus (11) vom Schamiertyp ist.

5. Laufkatzenanordnung (1) nach dem vorhergehenden Anspruch, **dadurch gekennzeichnet, dass** der Fixpunkt (22) entlang einem vorstehenden Element (24) der Halbwelle (9) angeordnet ist.

6. Laufkatzenanordnung (1) nach einem der vorhergehenden Ansprüche, **dadurch gekennzeichnet, dass** das Betätigungssystem (2) mindestens eine Bewegungsvorrichtung (19) variabler Länge umfasst, die die Halbwellen (9) operativ miteinander verbindet entsprechende Gelenkpunkte (21) und längenverstellbar in Abhängigkeit von der Betriebsposition der Räder (3) und/oder der Betriebsbetriebskonfiguration der Laufkatzenanordnung (1), die erhalten werden soll.

7. Laufkatzenanordnung (1) nach dem vorhergehenden Anspruch, **dadurch gekennzeichnet, dass** die Bewegungsvorrichtung (19) mit variabler Länge einen ersten Hubabschnitt aufweist, der in der Lage ist, mittels Zusammenwirkens des Übertragungssystems (18) die Räder (3) von der Zirkulationsbetriebsposition zu der Betriebsbetriebsposition und umgekehrt, indem auf den jeweiligen kinematischen Gelenkmechanismus (11) und einen zweiten Hubabschnitt eingewirkt wird, der angepasst ist, um die Laufkatzenanordnung (1) in verschiedene der Betriebskonfigurationen zu bringen.

8. Umkehrpflugsystem (100), **dadurch gekennzeichnet, dass** es mindestens eine Laufkatzenanordnung (1) nach einem der Ansprüche 1 bis 7 umfasst.

## Revendications

1. Chariot ensemble (1) comprenant au moins deux roues (3), un système d'actionnement (2) et au moins un système de transmission (17), ledit système d'actionnement (2) coopérant fonctionnellement avec ledit système de transmission (17) est de faire lesdites roues (3) passent d'une position de fonctionnement de circulation à une position de fonctionnement de travail au moyen d'une rotation, et inversement, dans laquelle les axes de rotation desdites roues (3) sont sensiblement parallèles entre eux dans la position de fonctionnement de travail et coïncidant sensiblement dans la position de fonctionnement de circulation, et pour faire varier une configuration de fonctionnement dudit ensemble chariot (1) en modifiant la distance entre lesdites roues (3) lorsque lesdites roues (3) sont dans ladite position de fonctionnement de fonctionnement, ledit système de rappel (17) comprenant au moins une tringlerie articulée (14) composée d'au moins un élément de guidage (16) commun à une paire de transmissions articulées, chacune desdites transmissions articulées comprenant au moins un premier bras (18), au moins un second bras (20), au moins une bielle (15), ladite bielle (15) ayant une première extrémité reliée à un moyeu respectif (5) au moyen de l'interposition d'une cinématique respective d'articulation de mécanisme (11) et une seconde extrémité reliée de manière pivotante à une première extrémité dudit premier bras (18), ledit premier bras (18) ayant une seconde extrémité reliée de manière pivotante à une première extrémité dudit second bras (20), ladite première extrémité dudit deuxième bras (20) et de ladite deuxième extrémité dudit premier bras (18) étant en outre reliées de manière articulée à un point fixe (22) d'un demi-arbre respectif (9), ledit deuxième bras (20) ayant un deuxième extrémité coulissant au moins partiellement le long dudit élément de guidage (16), **caractérisé en ce que** lesdites secondes extrémités desdits seconds bras (20) coopèrent entre elles par interposition d'au moins un moyen élastique (26).

2. Ensemble de chariot (1) selon la revendication précédente, **caractérisé en ce que** ledit système d'actionnement (2) fait varier une configuration de travail opérationnelle dudit ensemble de chariot (1) en changeant une distance entre les circonférences desdites roues (3).

3. Chariot ensemble (1) selon l'une quelconque des revendications précédentes, **caractérisé en ce qu'**il comprend:
- au moins un groupe d'articulation centrale (7);
- au moins deux roues (3), dont chacune est reliée à un moyeu rotatif respectif (5);
- au moins une paire de demi-arbres (9), chacun desdits demi-arbres (9) ayant une première extrémité reliée à un moyeu correspondant (5) au moyen de l'interposition d'une cinématique d'articulation (11) et une seconde extrémité connectée de manière pivotante audit groupe d'articulation central (7) en un respectif point d'articulation (13), ledit système de transmission (17) étant fonctionnellement interposé entre lesdits demi-arbres (9).

4. Chariot ensemble (1) selon la revendication précédente, **caractérisé en ce que** ledit mécanisme d'articulation (11) est du type charnière.

5. Chariot ensemble (1) selon la revendication précédente, **caractérisé en ce que** ledit point fixe (22) est agencé le long d'un élément en saillie (24) dudit demi-arbre (9).

6. Chariot ensemble (1) selon l'une quelconque des revendications précédentes, **caractérisé en ce que** ledit système d'actionnement (2) comprend au moins un dispositif de déplacement (19) de longueur variable reliant fonctionnellement lesdits demi-arbres (9) entre eux au niveau points d'articulation respectifs (21) et réglables en longueur en fonction de ladite position de fonctionnement desdites roues (3) et/ou de ladite configuration de travail de fonctionnement dudit chariot ensemble (1) à obtenir.

7. Chariot ensemble (1) selon la revendication précédente, **caractérisé en ce que** ledit dispositif de déplacement à longueur variable (19) comporte une première portion de course apte à déplacer, au moyen d'une coopération dudit système de transmission (18), lesdites roues (3) de ladite position de fonctionnement de circulation à ladite position de fonctionnement de fonctionnement, et inversement, en agissant sur ledit mécanisme cinématique d'articulation respectif (11), et une deuxième portion de course adaptée pour amener ledit chariot ensemble (1) dans diverses desdites configurations de travail opérationnel.

8. Système de labour réversible (100), **caractérisé en ce qu'**il comprend au moins un chariot ensemble (1) selon l'une quelconque des revendications 1 à 7.
